# EUROPEAN PATENT APPLICATION

(11) **EP 3 231 836 A1**
(43) Date of publication of application: **18.10.2017**
(21) Application number: 16165028.8
(22) Date of filing: 13.04.2016
(51) Int. Cl.: C08J 9/00, B29C 44/02, C08J 9/06, C08J 9/12, B29C 44/08

(54) **PROCESS FOR PRODUCING AN OPEN CELL THERMOPLASTIC FOAM**

(71) Applicant: Autoneum Management AG, 8406 Winterthur (CH)
(72) Inventor: Krause, Wenzel, 8400 Winterthur (CH); Haberl, Johannes, 8005 Zürich (CH)

(57) **Abstract**

A process for producing a thermoplastic resin foam, comprising at least steps (A) and (B): (A) subjecting a molten thermoplastic resin to a first gas obtained from a first compound at a first temperature; (B) subjecting the foamed resin obtained in step (A) to a second gas obtained from a second compound at a second temperature; wherein the second temperature is above the first temperature.

## Description

### Technical Field

The invention is directed to thermoplastic resin based expanded material, to a method of producing such a material and to the use thereof.

### Background Art

Foams are used abundantly in acoustic products for attenuating noise in for instance the car or building industry. For absorbing properties, open cell foams, in particularly reticulated foams, are preferable. E.g. polyurethane foam (PUR foam) is formed by reacting a di- or polyisocyanate with a polyol in the presence of water. Depending on additives, the foam can be provided as open cell foam which - for instance - is used in the automotive industry, the furniture industry as well as in the building industry. However, PUR type foams are environmentally problematic and also might give rise to health problems. In addition, they are difficult to recycle, in particular the thermoset PUR type foams mainly used. Thus, alternative foams are requested for.

Expanded materials or foams based on thermoplastic resins, in particularly polyester based, are a relatively recent development, due to a lack of availability of suitable foaming grades in the past. For instance, thermoplastic polyester foams may be prepared from linear polyesters, especially polyethylene terephthalate (PET), including recycled versions. When melt-extruded with a suitable physical and/or chemical blowing agent, these thermoplastic polyester resins yield closed-cell foams with the potential for a low density, good mechanical properties, and high chemical and thermal resistance.

However, as a result of the production process and the materials used, thermoplastic foams are typically produced with substantially closed cells. Therefore, these foams suffer from drawbacks as material for acoustic absorbing products, since for this an at least partially open cell structure in the form of sufficient number and size of cell walls or membrane pores that connect the cells is required.

It is therefore an object of the invention to provide a new and improved method of foaming thermoplastic resin materials, such as polyester resins, like polyethylene terephthalate, and its closely related modifications, to obtain an at least partially open cell structure suitable as material for acoustic absorbing products.

Yet another object of the invention is to provide a process for producing moulded cellular noise absorbing products from known thermoplastic resin materials like linear polyesters, such as polyethylene terephthalate, by means of an injection moulding machine or by extrusion into a foamed structure in the form of plates, rods, bands or other profiled shapes.

It is a further object of the invention to provide an expanded thermoplastic resin material that can be formed and used in cladding for automotive purposes or noise insulation in the building industry.

### Summary of invention

This object is achieved by the process for producing a thermoplastic resin foam according to claim 1, by the products according to claims 13 to 16, and the use of the products according to claim 17.

Specifically, the object is achieved by a process for producing a thermoplastic resin foam, comprising at least steps (A) and (B):
(A) subjecting a molten thermoplastic resin to a first gas obtained from a first compound at a first temperature;
(B) subjecting the foamed resin obtained in step (A) to a second gas obtained from a second compound at a second temperature;
wherein the second temperature is above the first temperature.

In particular by adding a second compound to the molten thermoplastic resin having an activation temperature higher than the activation temperature of the first compound in terms of obtaining a second gas from the second compound and a first gas from the first compound, it is possible to separate the activation of gas formation, e.g. in the form of gas bubbles, of the first and second compound, hence separating the foaming process from the cell disrupting process. By means of this, it is possible to control the formation of cells using the first gas obtained from or released by the first compound, and the subsequent cell wall disrupting process wherein the required open cell structure is generated using the second gas obtained from or released by the second compound. Thus, the process according to the invention is at least a process comprising two steps, wherein in the first step a foam comprising closed cells is formed [step (A)], and subsequently the closed cell structure is converted by means of cell wall disrupting to an open cell structure [step (B)].

Preferably, the cell wall disrupting step (B) is performed after the annealing and crystallisation of the resin foam obtained in step (A) is finalised. Surprisingly, it was found that subjecting the foamed thermoplastic resin obtained in step (A) to a second gas obtained from a second compound at a second temperature would disrupt or perforate the cell walls at least partially without a substantial further expansion of the foam, forming an open cell foam structure. The cell walls are at least partly disrupted; however the foam macroscopic matrix formed by the struts will be largely u n-efFected.

If the term activation temperature is used this means the temperature at which the compound releases gas either based on a physical process or a chemical process.

By using a second compound with an activation temperature higher than the activation and or evaporation temperature of the first compound, and adding it in the thermoplastic melt before the foaming process, it is possible to distribute the second compound evenly throughout the thermoplastic resin. Preferably the second compound is first mixed in the thermoplastic resin and then the first compound is added, before extrusion of the thermoplastic resin melt.

Surprisingly, as the cell walls between two cells are thinner than the struts or connections between multiple cells, the activation of the second gas bubble releasing compound will cause at least a puncturing or disruption of the thin wall surrounding it, producing a gap in the cell wall, hence connecting the adjacent cells. Depending on the concentration of the second compound and the intensity of the activation process, comparable with a minute explosion releasing gas, the cell walls are more or less disrupted. The disruption of the cell walls will leave struts of crystallised or semicrystalline resin forming an open cell foam matrix.

Preferably, 100% open cell foam is obtained, comparable with reticulated foam. Reticulated foam generally has a minimal number of cell windows or no cell windows (only struts) and, preferably with sufficiently small enough pores. Such open-pore structures lend themselves to absorb noise.

Depending on the use of open cell thermoplastic resin foam, the openness can be varied. However, independent of the test for porosity or openness of foams standard used, like for instance the airflow resistance as measured according to current ISO 9053, using the direct airflow method (method A), a substantial difference between the closed cell foam made by step (A) and the opened cell structure after step (B) must be given.

The open-cell content of the foam samples might also be measured using a gas pycnometer (Quantachrome Co., Bonyton Beach, FL, USA). The open cell measurement is a porosity determination used to calculate the gas accessible cellular volume of a material. The remaining volume is that occupied by closed cells and cell walls. The open-cell content can be calculated according to ASTM D6226-98: based on the open-cell content, the geometric volume of a foam sample, and a displacement volume (i.e., solid volume) of the foam sample. Preferably the open cell content is at least 20 %, preferably higher as 50%, preferably approximately between 95% and 100% in the area the second compound is activated to form gas.

The openness of the foam, necessarily depending on the use of the foam, can be further optimised by increasing the amounts of cells, by decreasing the cell size and by decreasing the foam density. The methods of doing so are known to the person skilled in the art, for instance by using additives to increase the bubble nucleation points in the foam or by using strut-enhancing additives.

### The production process

A process for producing a thermoplastic semi crystalline resin foam, comprising at least steps (A) and (B):
(A) subjecting a molten thermoplastic resin to a first gas obtained from a first compound at a first temperature;
(B) subjecting the foamed resin obtained in step (A) to a second gas obtained from a second compound at a second temperature;
wherein the second temperature is above the first temperature.

Optionally prior to step (A) the first compound and the second compound are mixed with the molten thermoplastic resin and the obtained mixture is extruded.

Optionally, a step of crystallisation and annealing of the product obtained in step (A) can be included in the process before it is subjected to the second gas releasing obtained in step (B).

The production process is mainly divided in 2 steps: a first production step (A) producing a closed cell thermoplastic resin foam, preferably according to the state of the art, and a second production step (B) activating the second compound to release gas, disrupting the cell walls between the cells leaving only the struts as the foam matrix structure hence forming an open cell thermoplastic resin foam.

One example of producing such expanded thermoplastic resin with closed cells according to step (A) might involve following production steps:
1. Mixing and heating the thermoplastic resin and eventually any or all of the chemical blowing agents in a extruder;
2. Cooling the melt in an extruder to a temperature suitable for extruding a film as strand. Eventually any or all of the physical blowing agents can be mixed in the melt during this cooling step.
3. Extruding the melt through a die to form a film with defined thickness and initiating the expansion process by the activated first compound. During the expansion process, the resin melt is subjected to a first gas obtained from a first compound at a first temperature;
4. Cooling the expanded or foamed film slowly to enhance the expansion process of the thermoplastic resin expanded film during cooling as well as enhancing the crystallisation and annealing of the thermoplastic resin in the foamed form. Optionally the thus formed foamed product can be further cooled and stored to increase the crystallinity of the thermoplastic resin.
5. Optionally the continuous expanded thermoplastic resin film can be cut into suitable size parts and or can be grinded to remove any closed thick skin when available.

The cut plates might be stacked and glued or welded together to blocks, which can be cut perpendicular to the original plate direction to orientate the formed cells in the foamed part.

The activation of the second compound to disrupt the cell walls should be done after the finalisation of the settlement of the cell matrix structure, ergo at least after step 4.

By separating the foaming process from the cell disruption process, it is possible to create an, at least partially, open cell thermoplastic resin foam and maintain substantially the properties of the overall matrix structure of the foam.

For the expanded foam according to the invention, the process and equipment may be used as known in the art for the actual production of closed cell thermoplastic resin foam of the first step (A). It may be an option to integrate the second cell disrupting step (B) in the foam production process as a second step add or after step 5, for example for a process directed to injection moulding of products or making standard plates, tubes or other profiled shapes.

However the second step (B) of disrupting the cell walls by activating the second compound can also be performed at a later stage after forming of the products.

By using the process according to the invention also a partially zone wise disruption of the cell walls is possible for instance only a top layer of a foam board or only a middle part of a product. As closed cells may be generally have a higher compressional strength and open cells are better in acoustic properties this give a good possibility to design acoustic and strong parts.

While the second step of disrupting the cell walls defines the level of openness and the areas of openness, it can be advantageously to base the second step on the design and process of the actual acoustic product.

### The thermoplastic resin

The thermoplastic resin employed in step (A) is preferably a thermoplastic semi-crystalline resin. The thermoplastic resin employed in step (A) is preferably a thermoplastic polyester resin or a thermoplastic polyolefin resin. Suitable resins are commercially readily available in foaming grades and have a good record of recyclability. Preferably the thermoplastic polyester resin is a linear polyester resin.

Preferably, in one embodiment, the thermoplastic resin employed in step (A) is a polyester selected from the group consisting of: polyethylene terephthalate, poly butylene terephthalate, poly cyclohexane terephthalate, polyethylene naphthalate, polyethylene furanoate or a mixture of two or more thereof. Copolyesters of these polyesters may also be employed.

The polyester resin might be mixed with other additives to improve the process and or the final product, for instance an expansion nucleating agent. These additives are known in the art.

Preferably, in a further embodiment, the thermoplastic resin employed in step (A) is a polyolefin selected from the group consisting of: polypropylene or polyethylene.

The selection of the thermoplastic resin taken is dependent on the requirements of the product. For instance, in a more hot environment the use of polyester is advantageous, for instance in the engine bay area of a vehicle or in filter technology. While for other applications other thermoplastic resins might be cheaper and good enough to be used.

### The first and second compound

Preferably the first and second compound is selected from the group consisting of a physical blowing agent and or a chemical blowing agent.

The term *"physicalblowing agent'* encompasses compounds which form gas, for example in the form of bubbles, upon evaporation.

The term *"chemicalblowing agent'* encompasses compounds which form gas, for example in the form of bubbles, upon decomposition.

The second compound releases gas at an activation temperature higher than the first compound, i.e. it releases gas or gas bubbles or forms gas or gas bubbles at a temperature which is above the respective temperature of the first compound. Preferably, the second compound should not be activated substantially, during the formation of the foam structure in the first step of the process. Although a small percentage of the second foaming agent might react in the first step, however, this would then act as the first foaming agent and not necessary result in ruptured or perforated cell membranes.

Preferably, the first and the second compound are selected such that the compound itself or the decomposition products are inert, in the sense that they do not substantially negatively interfere with the foaming, crystallisation and or annealing of the polyester resin. Alternatively, they are selected such that the compound itself or the decomposition products form an integral building block in the resin matrix formed, without producing substantially weak links in the structure.

Preferably, the second compound is not miscible in the thermoplastic resin melt, thus forming clusters therein. These clusters are occluded in the thermoplastic resin matrix of the closed cell foam formed.

Not miscible is defined for the process according to this invention that the compound or additive is dispersed in the melt as particles or droplets, forming clusters or inclusions in the foam produced at step (A).

The first compound is at least one selected from the group consisting of physical or chemical blowing agents. Preferably as first compound, a standard blowing agent used in the field for expanding resins may be used, in particularly for expanding polyester resin.

Preferably the first compound is one selected from the group of physical blowing agents consisting of inert gases, such as carbon dioxide, nitrogen, helium, neon, argon, and xenon, saturated aliphatic hydrocarbons, such as methane, ethane, propane, butane, pentane and hexane, saturated alicyclic hydrocarbons, such as cyclopentane, cyclohexane, ethylcyclopentane, aromatic hydrocarbons, such as benzene, toluene, xylene, halogenated saturated hydrocarbons, such as methylene chloride, carbon tetrachloride, ethers, such as methylal, acethal, 1,4-dioxane and ketones, such as acetone, methyl ethyl ketone and acetyl ketone or a mix of at least two physical blowing agents.

In the process of this invention, as first compound, physical blowing agents are preferred, especially those which have a boiling point at atmospheric pressure of not more than 200 degrees centigrade, above all not more than 150 degrees centigrade, are preferred.

The blowing agent for the first and second compound can also be selected from the group of chemical blowing agents consisting of compounds able to decompose or react either endothermically or exothermically th releasing gas, such as carbon dioxide, carbon monoxide, nitrogen, nitroxide, NOx compounds or ammonia. During step (A) of the process according to the invention, the first compound selected from the group of chemical blowing agents would release the gas forming gas bubbles in the molten thermoplastic resin, and by further expansion forming the typical foam structure.

During step (B) of the process according to the invention, the second compound selected from the group of chemical blowing agents would release also gas that would expand the cluster or inclusion. In areas where the thermoplastic resin surrounding the inclusions or clusters is thin enough this expansion would cause a rupture or puncture of the cell walls, releasing the gas in the cells.

The second compound and, preferably the first compound, comprises at least a chemical blowing agent, preferably selected from the group of consisting of azides, hydrazides such as p,p'-hydroxybis-(benzenesulfonyl hydrazide), semicarbazides, such as p-toluenesulfonyl semicarbazide, p-toluenesulfonyl semicarbazide, azocompounds such as azodicarboxamide, triazoles, such as nitrotriazolone, tetrazoles, such as 5-phenyltetrazole, , alkali bicarbonates, such as sodium bicarbonate, anhydride, peroxide, nitrocompounds, perchlorates.

The second compound might comprise of a mixture of at least a blowing agent, and optionally a carrier phase and or inert particles.

Preferably the second compound further comprises a carrier phase, such as a second polymer phase from polycarbonate or polyamide or polypropylene or polyethylene.

Preferably the second compound further comprises metallic particles or ferro- or ferri- magnetic particles or dielectric susceptible particles or salts, and or carbon black.

Preferably, the carrier phase and the second compound are selected such that they form together not miscible clusters or inclusions in the foamed thermoplastic resin. Preferably, during heating according to step (B), carrier phase temperature is increased locally such that the second compound is able to release gas, creating an expansion of the inclusion or cluster and rupturing the resin surrounding it. Eventually a slight softening or melting of the resin directly surrounding the inclusion or cluster might enhance the puncturing or disrupting effect.

By combining the magnetic particles with the second compound and a suitable induction process, the activation temperature can be increased locally and inducing a quicker and or stronger response in the form of local disruption and or puncturing of the cell membrane.

The metallic or the ferro- or ferri- magnetic particles have preferably a size distribution with a maximum smaller than 1 µm, preferably between 300 and 400 nanometres.

Preferably, the second compound and the corresponding activating process is selected such that the gas or gas bubbles are released quickly or instantly, increasing the disrupting energy in the area the second compound is clustered. In particularly in the thin walls of the foamed, thermoplastic resin this will lead to larger punctures or cell holes.

Preferably the second compound is chosen such, that the blowing agent can be activated without the need to heat up and destroy the foam structure substantially, so the matrix does not substantially collapse during the second step. In addition, the second compound is selected such that the cell walls are disrupted but no substantial expansion of the foamed product takes place.

The activating process of the second compound, and the second compound, and or the carrier phase or coating layer, are preferably chosen in combination to obtain the optimal process conditions.

Step B can be triggered by applying heat, preferably substantially only heating the second compound and or carrier phase and or particles. However the activation of the cell destruction (B) can also take place during a process step of forming a product out of the foam for instance during a steam moulding or hot moulding process

Possible triggering processes can be at least one selected from the group of
- Applying electromagnetic waves, for instance microwaves, infrared light, visible light, or ultraviolet light.
- Oscillating electric field
- Oscillating magnetic field, induction heating
- Ultrasound
- Applying a fluid, for instance steam or water.

Other mechanisms than thermal relaxation can be used, such as photochemical processes.

Depending on the second compound, the concentration of the second compound, and the activation temperature needed, a fully open cell structure in the form of a reticulated cell structure or a less open cell structure can be achieved.

The second step can be run under steam or vacuum to activate the second compound and or to increase the activation temperature and or to release the gas and or cell debris formed, thereby aiding the cell wall disruption.

Surprisingly, in one embodiment, the second compound which effects cell wall disrupting resulting in an open cell structure can be selected from the same group of chemical compounds known as chemical blowing agent if used as first compound provided the second temperature is above the first temperature.

Preferably this process may be enhanced by a stream of fluid passing through the cells after the activation of the second compound, this may further rupture already punctured or damaged cell walls in addition it might clear loose debris in the foam cells.

The first compound may be used in an amount of 0.05 to 30 percent by weight, preferably 1 to 20 percent by weight, based on the thermoplastic resin. If the amount of the first compound is less than 0.05 percent by weight, foaming scarcely takes place, and a feasible expanded article cannot be obtained. If the amount exceeds 30 percent by weight, the gas foams up, thus making it difficult to obtain a well formed article of the desired shape.

The foam has preferably a density of <400 kg/m³, preferably between 50 and 150 kg/m³.

A thermoplastic resin foam, comprising cells, wherein at least 90 % of the cells, preferably 95 % of the cells, are open cells as determined by ASTM D6226-98.

An injection-moulded article comprising the thermoplastic resin foam as defined in claim 14 or 15.

Use of a thermoplastic polyester resin foam as defined in claim 14 or 15 or use of an injection-moulded article defined in claim 16 as or in an acoustic absorbing product.

### Example

The process according to the invention with a first compound chosen from the group of physical blowing agents.

The second compound is a not miscible cluster with carbon black and polycarbonate as a carrier phase and a chemical blowing agent with a decomposing temperature higher than the melting temperature of the thermoplastic resin.

The thermoplastic resin is a linear polyester, preferably PET, with a melting temperature of around 260°C.

Step (A) follows the normal process for producing closed cell thermoplastic polyester resin foam whereby the second compound is first mixed in the molten resin and then the first compound in the form of a gas is introduced in the extruder and mixed, subsequently the extrudate is pushed through a die forming an extruded film that is able to expand and forming the expanded foam, a further cooling process further crystallises and anneals the expanded resin structure forming a stable settled foam.

The foam is cut into thin sheets. Optionally the skin is grinded down to obtain an open cell surface, enhancing the second process step (B) of subjecting the foam plate to microwaves, thereby agitating which heats the second compound, which will release gas and disrupting the closed cell structure, in particularly the thin cell walls, thereby opening the cells to form open cell foam.

### Figures

Figure 1 shows schematically picture of a closed cell foam
Figure 2 shows schematically picture of a reticulated cell foam
Figure 3 shows schematically the foam situation before the actual activation of the second compound according to the invention

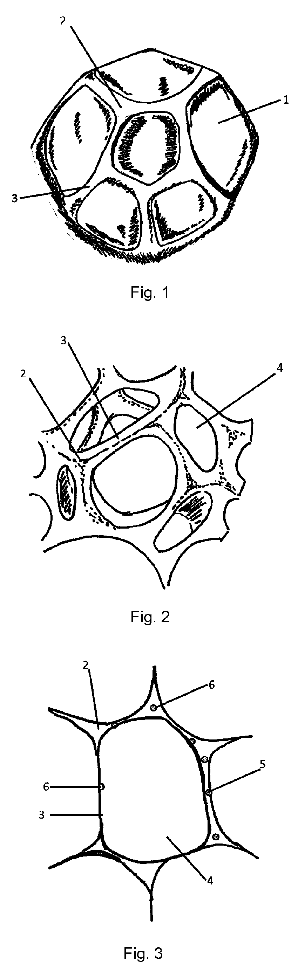

Figure 1 and 2 is showing a schematic picture of a foam cell structure with closed cells (fig.1) and with fully open cells (fig. 3). Extruded foams are produced by generating small gas bubbles in the polymer melt. The polymer melt solidifies and forms a matrix structure. The foam derived from the state of the art process or at the end of the first step according to the invention is formed as closed cell foam comparable with figure 1. The foam matrix structure is formed by cell-walls 1 and 3, also known as lamellae, and struts 2, also known as plateau borders. The areas of the cell walls or lamellae between two gas bubbles are the thinnest areas of polymer material. While the struts formed where more bubbles join, are thicker.

In Figure 2 a fully open cell structure is depicted. Where the cell walls or lamellae are removed and or destroyed and only the struts are forming the foam matrix structure. The adjacent cells are open and air or other fluids can flow freely between the cells. This fully open cell structure is optimal for a good acoustic performance. With the process according to the invention either fully opens areas between the cells or disrupted cell walls can be obtained depending on the amount and size of the clusters formed by the second compound and the intensity of the activating process.

Figure 3 is showing a schematic cross section of the cell with again the struts 2 and the lamellae or cell walls 3. This shows schematically the situation of the foam after the first step, whereby the annealing and crystallisation is finished and in principle closed cell foam is produced. The closed cell foam according to the invention however has at this stage clusters (5, 6, and 7) of second compound incorporated in the foam matrix. The process of extrusion and subsequent foam formation gives an equal distribution of the clusters of not miscible second foaming agent either alone or combined with a carrier phase, coating and or with ferromagnetic particles. These clusters form occlusion in the thermoplastic resin matrix of the closed cell foam. Depending on the area of the matrix, in the struts 7, in a thin cell wall 6 or a thicker cell wall 5, and the activating process the reaction will cause a partial or full rupture of the cell wall or will not cause any mayor damage.

## Claims

1. A process for producing a thermoplastic resin foam, comprising at least steps (A) and (B):
(A) subjecting a molten thermoplastic resin to a first gas obtained from a first compound at a first temperature;
(B) subjecting the foamed resin obtained in step (A) to a second gas obtained from a second compound at a second temperature;
wherein the second temperature is above the first temperature.

2. Process according to claim 1, wherein prior to step (A) the first compound and the second compound are mixed with the molten thermoplastic resin and the obtained mixture is extruded.

3. Process according to one of the preceding claims, further comprising crystallising and annealing the product obtained in step (A) before it is subjected to the second gas release obtained in step (B).

4. Process according to one of the preceding claims, wherein the first compound is at least one selected from the group consisting of physical or chemical blowing agents.

5. Process according to one of the preceding claims, wherein the first compound is one selected from the group of physical blowing agents consisting of inert gases, such as carbon dioxide, nitrogen, helium, neon, argon, and xenon, saturated aliphatic hydrocarbons, such as methane, ethane, propane, butane, pentane and hexane, saturated alicyclic hydrocarbons, such as cyclopentane, cyclohexane, ethylcyclopentane, aromatic hydrocarbons, such as benzene, toluene, xylene, halogenated saturated hydrocarbons, such as methylene chloride, carbon tetrachloride, ethers, such as methylal, acethal, 1,4-dioxane and ketones, such as acetone, methyl ethyl ketone and acetyl ketone.

6. Process according to one of the preceding claims, wherein the second compound comprises a chemical blowing agent, preferably selected from the group consisting of azides, hydrazides such as p,p'-hydroxybis-(benzenesulfonyl hydrazide), semicarbazides, such as p-toluenesulfonyl semicarbazide, p-toluenesulfonyl semicarbazide, azocompounds such as azodicarboxamide, triazoles, such as nitrotriazolone, tetrazoles, such as 5-phenyltetrazole, , alkali bicarbonates, such as sodium bicarbonate, anhydride, peroxide, nitrocompounds, perchlorates.

7. Process according to one of the preceding claim wherein the first and/ or second compound comprises at least a chemical blowing agent, preferably selected from the group of consisting of azides, hydrazides such as p,p'-hydroxybis-(benzenesulfonyl hydrazide), semicarbazides, such as p-toluenesulfonyl semicarbazide, p-toluenesulfonyl semicarbazide, azocompounds such as azodicarboxamide, triazoles, such as nitrotriazolone, tetrazoles, such as 5-phenyltetrazole, , alkali bicarbonates, such as sodium bicarbonate, anhydride, peroxide, nitrocompounds, perchlorates..

8. Process according to one of the preceding claims, wherein the second compound further comprises a carrier phase, such as a second polymer phase from polycarbonate or polyamide or polypropylene or polyethylene.

9. Process according to one of the preceding claims, wherein the second compound further comprises metallic particles or ferro- or ferri- magnetic particles or dielectric susceptible particles or salts, and or carbon black.

10. Process according to one of the preceding claims wherein the thermoplastic resin employed in step (A) is selected from the group consisting of a thermoplastic polyester resin or a thermoplastic polyolefin resin.

11. Process according to one of the preceding claims, wherein the thermoplastic resin employed in step (A) is a polyester selected from the group consisting of: polyethylene terephthalate, polybutylene terephthalate, polycyclohexane terephthalate, polyethylene naphthalate, polyethylene furanoate or a mixture of two or more thereof.

12. Process according to one of the preceding claims wherein the thermoplastic resin employed in step (A) is a polyolefin selected from the group consisting of: polypropylene or polyethylene.

13. A thermoplastic resin foam, obtainable by a process as defined in any one of claims 1 to 13.

14. A thermoplastic resin foam, comprising cells, according to claim 13, wherein at least 20%, at least 50 % of the cells, preferably 95 % of the cells, are open cells as determined by ASTM D6226-98.

15. A moulded article comprising the thermoplastic resin foam according to claim 13, or 14.

16. An injection-moulded article comprising the thermoplastic resin foam as defined in claim 13 or 14.

17. Use of a thermoplastic polyester resin foam as defined in claim 13 or 14 or use of an injection-moulded article defined in claim 16 or use of a moulded article defined in claim 15 as or in an acoustic absorbing product.
